# EUROPEAN PATENT APPLICATION

(11) **EP 3 040 895 A1**
(43) Date of publication of application: **06.07.2016**
(21) Application number: 14307209.8
(22) Date of filing: 30.12.2014
(51) Int. Cl.: G06F 21/52

(54) **SYSTEM AND METHOD FOR PROTECTING A DEVICE AGAINST RETURN-ORIENTED PROGRAMMING ATTACKS**

(71) Applicant: GEMALTO SA, 92190 Meudon (FR)
(72) Inventor: D'annoville, Jerome, 92190 MEUDON (FR)

(57) **Abstract**

A system, method and computer-readable storage medium with instructions for operating an electronic device to protect against attacks that are constructed by chaining programming gadgets from executable code. The technique includes associating a value with functions and pushing and popping the function association value from a special stack. Further, on function returns, top of special stack is compared to the function association value. Other systems and methods are disclosed.

## Description

### BACKGROUND OF THE INVENTION

The present invention relates generally to protecting electronic devices against attacks designed to discern secret information stored on the electronic devices, and in particular, to protecting an electronic device from return-oriented programming attacks.

Electronic communication and commerce are powerful yet dangerous tools. With the widespread availability of network technology, such as the Internet, there is an ever increasing use of online tools for communication and commerce. Each year more users find it easier or quicker to conduct important transactions, whether in the form of correspondence or commerce, using computers and other computerized devices over computer networks. However, there is always the risk that the security of electronic transactions can be compromised through interception by third parties who do not have the right to partake in the transactions. When malicious third parties obtain access to otherwise private transactions and data there is risk of economic loss, privacy loss, and even loss of physical safety. Cryptography is one mechanism employed to avoid intrusion into the privacy of electronic transactions and data.

One type of attack against the sensitive information that is stored in security devices is the so-called *Buffer Overflow Attack.* Buffer overflow is an attack model that is based on stack allocation. Buffer overflows occur when data is written outside of the allocated space for a particular data structure. If the operating system does not guard against such out-of-bounds writing of data, an attacker may write into the space that is intended as the return address for procedure calls. By doing so, the attacker may redirect the return to a malicious code, which would run with the same permissions and privileges as the targeted code. Thus, the malicious code may perform any function that can otherwise be programmed. One mechanism used to compromise security would be to open a remote shell on the compromised machine. In that case, the injected malicious code is referred to as shellcode.

There are several defenses that have been deployed against buffer overflow attacks. For example, one defense mechanism, referred to as "W⊕X," ensures that the same memory locations may not be both written to (W) and executed (X). Memory locations may be either written to or executed, but not both. Thus, if an attack relies on being able to write to a location and have that location executed by the processor, the W⊕T defense would successfully prevent that line of attack.

One type of buffer overflow attack is the *Return-into-library* attack. In the return-into-library attack, rather than directing a function return to an injected shellcode, the attacker overwrites the return address with the entry location of a library function. By chaining together calls to library functions, an attacker may create functionality that may be useful to the attacker.

One defense employed to thwart the return-into-library attack is simply to limit the library functions available to an attacker. By limiting library access, the attacker may be prevented from easily producing meaningful attacks against the target device.

In 2007, Hovav Shacham presented a particularly powerful version of buffer overflow attacks called the Return-Oriented Programming attack. Hovav Shacham, The Geometry of Innocent Flesh on the Bone: Return-into-libc without Function Calls (on the x86), Proceedings of ACM CCS 2007, ACM Press, 2007 (The entire disclosure of which is incorporated herein by reference). The return-oriented programming attack takes advantage of the high density of the Instruction Set Architecture (ISA) of target machines, e.g., the x86 ISA. In x86 there is not a specified instruction length. Thus, any memory sequence could be interpreted by a processor as a valid instruction sequence. If a library sequence that precedes the RET opcode (C3) amounts to a valid instruction, the attacker may call that sequence for the purpose of executing that instruction. Useful sequences may be programmed into *gadgets* that perform well-defined operations. Shacham demonstrated that the *gadgets* provide a Turing complete language and that by chaining such *gadgets* together an attack can be constructed using standard programming constructs such as assignment, control-flow, arithmetic, etc.

Return-oriented programming relies on two phases. A first phase searches a library for useful sequences that terminate in the RET opcode (C3). The sequences are then organized in a *trie* to allow for easy retrieval during a programming phase in which gadgets are chained together to produce a desired program.

In an embedded operating system - for example, IOS from Apple Inc., Cupertino, California, USA - some protections like address-space layout randomization (ASLR) and the fact that page code is not writable prevent attackers from tampering with applications to run malicious code. However, an attacker can circumvent such protections by tracking the existing application code using a debugger or by injecting code which causes the application to execute in a different order as specified by the attacker.

From the foregoing it will be apparent that there is still a need for an improved technology to provide a secure mechanism that is computationally efficient, that does not require excessively large registers or other storage, and with which a portable security device - e.g., a mobile electronic device - has the capability to protect against return-oriented programming attacks.

### BRIEF DESCRIPTION OF THE DRAWINGS

Figure 1 is a schematic illustration of a telephony network in which a mobile electronic device is connected to other mobile electronic devices and to data servers.
Figure 2 is a schematic illustration of a high-level architecture of a mobile electronic device.
Figure 3 is a schematic illustration of programs stored in a memory of the mobile electronic device of Figure 2.
Figure 4 is an illustration of an example of an application stack.
Figure 5 is an illustration of a SpecialStack used to protect an electronic device against, for example, return-oriented programming attacks according to an embodiment.
Figure 6 is a flowchart illustrating the processing flow for the creation and insertion of the code that causes the behavior described above during the execution of a function.
Figure 7 is a block diagram illustrating the function which results from the process of Figure 6.
Figure 8 illustrates an aspect of the technology to protect a device against a return-oriented programming attack in which the technology is embodied in a programming development computer.

### DETAILED DESCRIPTION OF THE INVENTION

In the following detailed description, reference is made to the accompanying drawings that show, by way of illustration, specific embodiments in which the invention may be practiced. These embodiments are described in sufficient detail to enable those skilled in the art to practice the invention. It is to be understood that the various embodiments of the invention, although different, are not necessarily mutually exclusive. For example, a particular feature, structure, or characteristic described herein in connection with one embodiment may be implemented within other embodiments without departing from the spirit and scope of the invention. In addition, it is to be understood that the location or arrangement of individual elements within each disclosed embodiment may be modified without departing from the spirit and scope of the invention. The following detailed description is, therefore, not to be taken in a limiting sense, and the scope of the present invention is defined only by the appended claims, appropriately interpreted, along with the full range of equivalents to which the claims are entitled. In the drawings, like numerals refer to the same or similar functionality throughout the several views.

In an embodiment of the invention, a technology is provided that protects electronic devices, such as mobile telephones, and other electronic computerized devices, from buffer overflow attacks such as return-oriented programming attacks by maintaining a special stack that may be used to detect manipulation of function return control-flow.

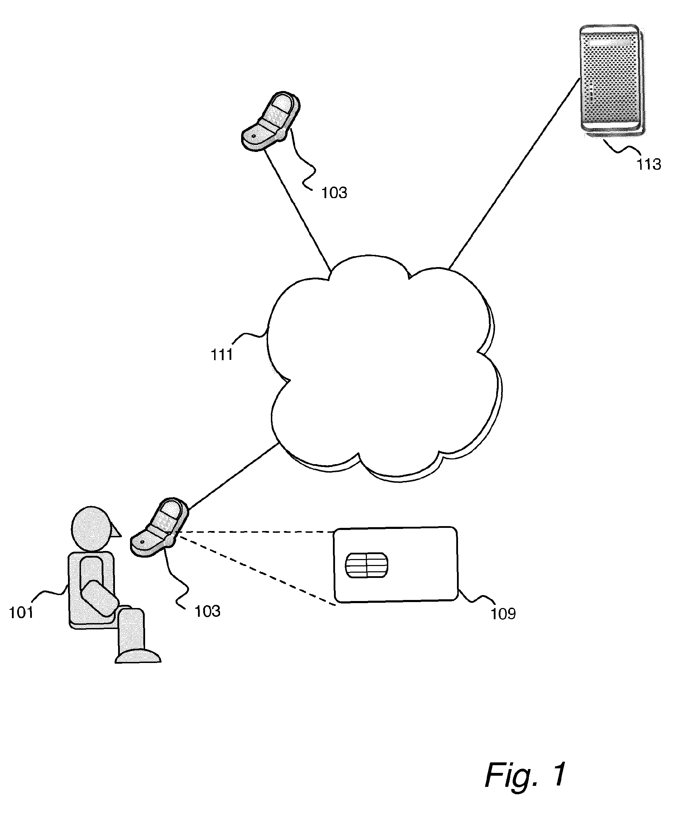

Figure 1 is a schematic illustration of a network 111 connecting a mobile device 103 with a portable security device 109, e.g., a smart card, connected thereto, to one or more remote servers 113. For illustrative purposes, we describe the technology presented herein as it may be used in a mobile device 103. However, the technology presented is applicable to any programmable electronic device subject to attacks against flow-of-control associated with procedure calls.

In Figure 1, a user 101 operates a mobile device 103 to interact with one of the servers 113 or another mobile device 103 over the network.

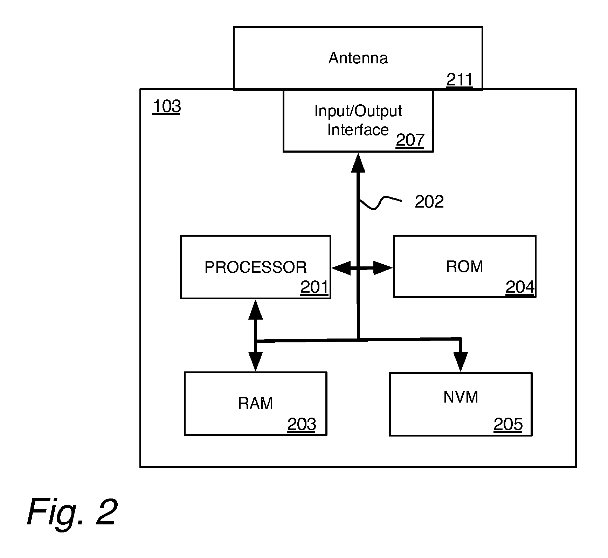

Figure 2 is a schematic illustration of a mobile device 103. The mobile device 103 may include a processor 201 connected via a bus 202 to a random access memory (RAM) 203, a read-only memory (ROM) 204, and a non-volatile memory (NVM) 205. The mobile device 103 further includes an input/output interface 207 for connecting the processor 201, again typically via the bus 202, to an antenna 211 by which the mobile device 103 may be connected to a host computer or other peripheral device.

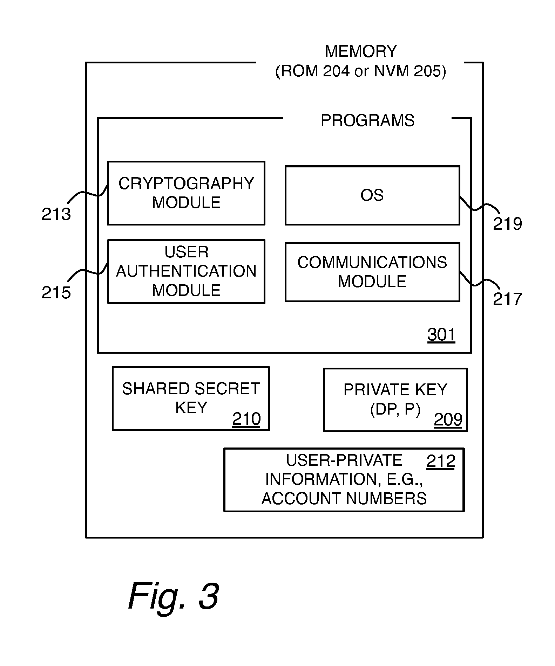

The NVM 205 and/or ROM 204 may include computer programs 301 as is illustrated in Figure 3. While it is here depicted that the computer programs 301 are all co-located in the ROM 204 or the NVM 205, in actual practice there is no such restriction as programs may be spread out over multiple memories and even temporarily installed in RAM 203. Furthermore, the mobile device 103 may include multiple ROMs or NVMs. The programs 301 include operating system programs as well as application programs loaded on to the mobile device 103. The NVM 205 or ROM 204 may also contain private data, such as a private key 209 or a shared secret key 210, stored either in its basic form or in derived quantities, as well as other user-private information 212 such as account numbers.

The mobile device 103 programs 301 may include a cryptography module 213, a user authentication module 215, a communications module 217, and the operating system OS 219.

In the course of performing operations, any of the programs 301 may perform various forms of procedure calls. In a computer architecture in which procedure calls are based on a calling stack, the return address (i.e., the next instruction to be executed after conclusion of processing the called procedure) is placed on the stack in a structure commonly referred to as a *stack frame.* The stack frame typically contains - in order from bottom to top beginning with the caller's stack frame - caller routine's local variables, arguments to the callee, return address pointing to the next instruction to execute upon return from the callee (unless these are placed in another location such as in a register dedicated to that purpose), saved register values, and the local variables of the callee. Stack frames may have different content and orders of elements.

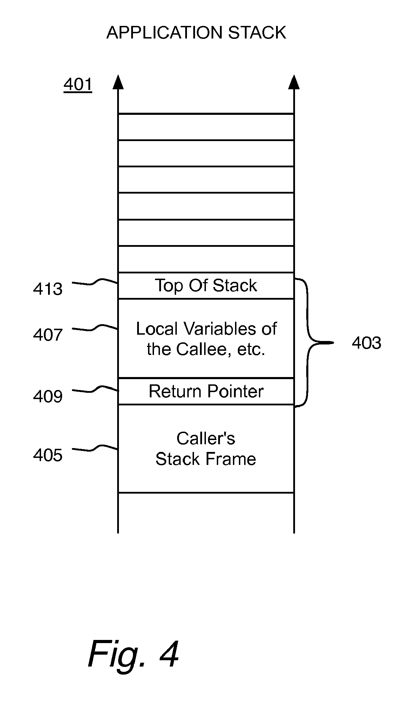

Figure 4 is an illustration of an example of an application stack 401. The callee-stack frame 403 is pushed onto the stack above the caller-stack frame 405. The callee-stack frame 403 contains the local variables 407 of the callee. The stack frame 403 may further include values such as saved register values and arguments that are passed via the application stack 401. The return pointer 409 points to a return location in the caller code; namely, the location of the caller code that is the next location to execute after return of control to the caller code.

If the callee makes a procedure call, the stack frame for it is placed on the top of the stack 413.

The stack-frames illustrated in Figure 4 are only examples. Many different structures are possible and there may be additional information stored in the stack frames that are not shown herein. Furthermore, as noted above, in some architectures, notably some RISC architectures, some arguments and return addresses may be placed in registers rather than in the stack frame.

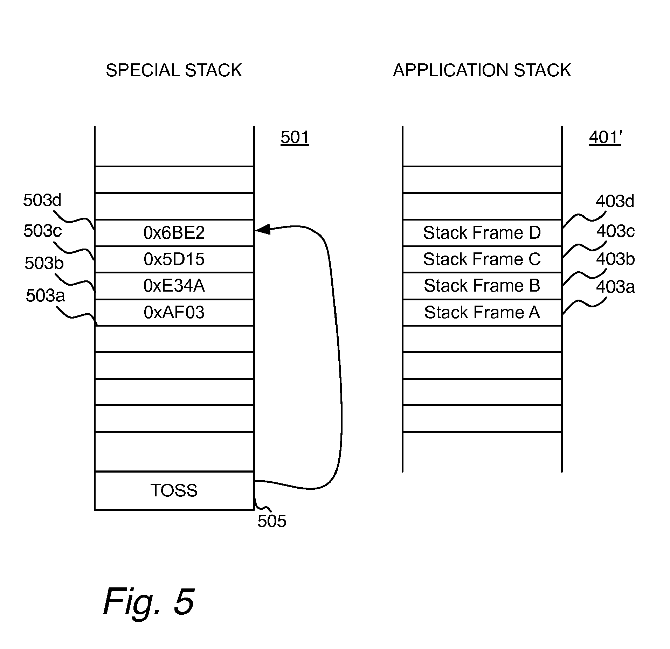

[According to an embodiment, a second stack is maintained by the processor 201 while executing a program. This stack is referred herein as the *SpecialStack.* The SpecialStack 501 is illustrated in Figure 5. Also illustrated is an Application Stack 401' which includes stack frames 403a - d with stack frames for Functions A - D. As is described in greater detail below, when a function is created a special value is associated with that function; that value is referred to herein as the *FunctionAssociationValue.* The FunctionAssociationValue may be a random value generated when the function is compiled. In alternative embodiments, the FunctionAssociationValue may be derived from some characteristic of the function, e.g., a checksum calculated over the body of the function, a signature based on the function, a hash of some portion of the function. In a further alternative, the FunctionAssociationValue could be assigned based on a time-stamp. At the beginning of the execution of the function, the FunctionAssociationValue is PUSHED onto the SpecialStack. Thus, in the example of Figure 5, four functions (A through D) have been called, having the FunctionAssociationValues 0xAF03, 0xE34A, 0x5D15, and 0x6BE2, entries 503a through 503d, respectively.

In a preferred embodiment, the SpecialStack 501 is not the same or a portion of the ApplicationStack 401. If the SpecialStack 501 is placed on the ApplicationStack 401 an attacker may manipulate the SpecialStack 501 and thereby circumvent the protection technique described herein. The SpecialStack 501 may preferably be located in the heap (i.e., the large pool of memory maintained by computers from which dynamic memory allocations may be made)or in a static memory segment of the electronic device 103. The SpecialStack 501 should be dimensioned so that it can accommodate the maximum stack frame number for the application being executed. Alternatively adequate mechanisms can be implemented to address the case when this SpecialStack reaches its maximum boundary by allocating more space.

As a program is being executed, just prior to executing a return, the top value of the SpecialStack 501 is POPed from the SpecialStack 501. At that point the top value, which may be pointed to by a stack pointer specific to the SpecialStack 501 (illustrated in Figure 5 as *Top of Special Stack (TOSS)* 505, which may, for example, be located at the bottom of the buffer for the SpecialStack 501 as shown or alternatively as a hardware register), is compared to the FunctionAssociationValue of the currently executing function. If function return control-flow has been manipulated, the value popped from the stack would not match the FunctionAssociationValue of the current function because there would inherently be a mismatch of PUSHes and POPs onto and from the SpecialStack 501. Accordingly, such a mismatch may cue suspicion that an attack has been mounted against the device.

Furthermore, there is a possibility for a non-local GOTO that would cause branch back to a function lower in the Application Stack 401.Consider, for example, the possibility of Function D making a non-local GOTO that transfers control back to Function B. If this non-local GOTO is not a recursive call, the compiler would have generated code to remove Stack Frame D 403d and Stack Frame C 403c from the Application Stack 401'. The present technology also handles that situation with respect to the SpecialStack 501. Thus, in the event of a non-local GOTO that transfers control to a function lower in the application stack 401, the compiler (or other code processor), according to the present technology, generates code to update TOSS 505 is such away that it points to entry 503b thereby removing the entries 503d and 503c, respectively, from the active scope of the SpecialStack 501.

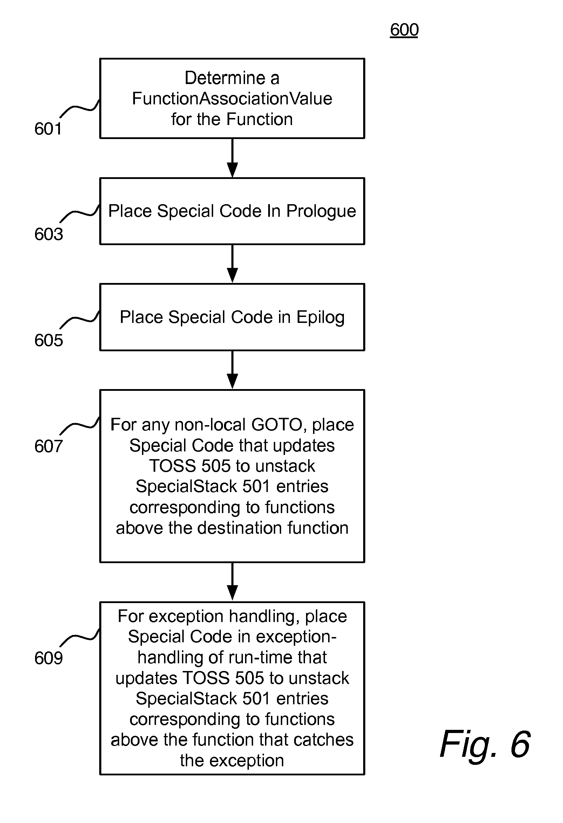

Figure 6 is a flowchart illustrating the processing flow 600 for the creation and insertion of the code that causes the behavior described above during the execution of a function. The process illustrated in Figure 6 may be included in a compiler, an assembler, added to an interpreter, or provided as a post-processing application. First, when processing (e.g., compiling) a function, a FunctionAssociationValue is determined for the function, step 601. The FunctionAssociationValue may be generated, for example, when the program is compiled and may be a random number generated at that time.

Next, some special code is inserted into the *function prologue* of the function, step 603. A function prologue is a short code segment at the beginning of a function that prepares the application stack and registers for use by the function. According to the technology presented herein, a static piece of code is inserted immediately before the application code of the function. That static piece of code includes a statement to PUSH the FunctionAssociationValue associated with the function onto the SpecialStack 501.

Next, a corresponding piece of static code is inserted into the *function epilog* of the function, step 605. A function epilog is a short code segment at the end of a function, executed immediately before the return to the caller function. The function epilog reverses the actions of the function prologue and returns control to the caller. The special static code inserted into the epilog performs the following tasks:
- POPs or otherwise retrieves the top value from the SpecialStack 501, e.g.:
   ∘ SetTestValue to POP from SpecialStack
- Compare the retrieved value to the FunctionAssociationValue for the currently executing function, e.g.:
   ∘ IF TestValue EQ FunctionAssociationValue
      THEN
      ▪ Decrement TOSS
      ▪ Return
- If the retrieved value does not correspond to the FunctionAssociationValue, then a corrective action is taken, e.g.:
   ∘ ELSE report an error condition indicative of a possible attack.

Further, any non-local GOTOs that transfers control to a function lower in the application stack 401 should be handled, step 607. For any non-local GOTO , all entries in the SpecialStack 501 above the target function of the GOTO become invalid because of the non-local GOTO. Thus, for non-local GOTOs special code is inserted in conjunction with the GOTO to unstack those entries corresponding to functions above the destination function from the SpecialStack 501 by pointing the TOSS 505 to the entry in the SpecialStack 501 corresponding to the target function of the GOTO. For any raised exception, all entries in the SpecialStack 501 above the target function that contains the corresponding exception handler of the raised exception are removed. Thus, special code is inserted in exception handling to update TOSS 505 in such way that those entries from the SpecialStack 501 are no more in the active scope. For any raised exception, all entries in the SpecialStack 501 above the target function that contains the corresponding exception handler of the raised exception are removed. Thus, special code is inserted in exception handling of the run-time library to update TOSS 505 in such way that those entries from the SpecialStack 501 do not remain in the active scope, step 609. As a practical matter, the run-time library would contain the code (see discussion below) for handling updates to the SpecialStack 501 for exception handling and that special code is captured by linking to the run-time library that contains that code.

Thus, in the case the language supports exception handling that could cause transfer of control back to a function lower in the Application Stack 401. Consider, for example, the possibility of Function D raising an exception EXCEPTION that is not caught in Function D, and also not in Function C or B, but where the run-time library transfers control back to a block of instructions in Function A that catches EXCEPTION. To find the right exception handler, the run-time performs a search of the tables of exception handlers for functions in the active scope from the top of the application stack. During the search, the run-time library updates the TOS of the application stack each time an open block of a function that catches EXCEPTION until an open block of a function catches EXCEPTION is found. The present technology also handles that situation with respect to the SpecialStack 501. Thus, in the event of an exception whose handling by the run-time library transfers control to a function lower in the application stack 401, the run-time library, according to the present technology, executes code to update TOSS 505 in such way that it points to entry 503a thereby removing the entries 503d, 503c and 503b, respectively, from the active scope of the SpecialStack 501. Other mechanisms can be used to implement updates to the SpecialStack 501 in the event of exception handling; however, the basic concept is that TOSS is managed in the similar way as managing of active scope on the application stack.

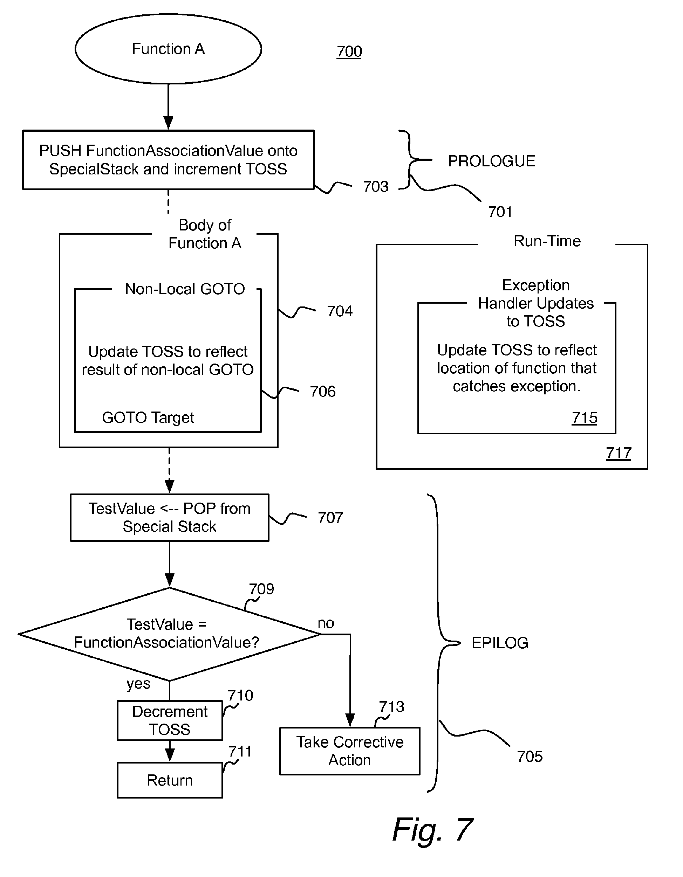

Figure 7 is a block diagram illustrating the resulting function 700 from the process of Figure 6. The prologue 701 includes a statement 703 to PUSH the FunctionAssociationValue onto the SpecialStack 501 and to increment the TOSS 505.

The function 700 includes some application code 704. If there are any non-local GOTOs in the application code 704, the application code 704 would have inserted therein code 706 to unstack the SpecialStack 501 entries that are no longer valid due to the non-local GOTO.

The application that includes the function 700 also handles updates to the SpecialStack 501 in the event of exception handling. One mechanism for handling such updates is to provide code 715 to update the TOSS in the manner described hereinabove in the run-time library 717 of the run-time environment in which the application executes.

Finally, the function 700 includes an epilog 705. The epilog 705 includes a statement 707 to POP the top value from the SpecialStack 501, in this case into a variable referred to as TestValue.

The TestValue is compared to the FunctionAssociationValue, instruction 709. If the comparison produces a match, the TOSS 505 value is decremented to point to the SpecialStack 501 entry corresponding to the caller function, Instruction 710, and control is returned to the caller, Return instruction 711. The epilog 705 also contains instructions 713 to take a corrective action or report an error condition if the TestValue does not match the FunctionAssociationValue.

If the application code of the function includes a number of calls, the SpecialStack 501 will grow to include FunctionAssociationValues for each called function. As normal execution flow proceeds, those FunctionAssociationValues are POPed from the top of the SpecialStack 501 in the reverse order from which they have been PUSHED onto the SpecialStack 501. When the test to confirm correspondence between the FunctionAssociationValue and the POPed value has confirmed a match, the SpecialStack 501 reflects that normal control flow. However, if for some reason a match is not confirmed, e.g., when a return-oriented programming attack has overwritten the normal return address of an upper stack frame with a transfer to some other location, then the SpecialStack 501 would not proceed through the normal sequence of PUSHes and POPs and would therefore be out-of-sync with the application stack 401'. Thus, when a return epilog is encountered, the instructions 707 and 709 would trigger the transfer to the corrective action instructions 713.

The corrective action instructions 713 may contain any of the following, for example:
- Termination of execution of the process.
- Warning message to the user of the program being executed that an attack may have occurred.
- Transmission of a warning to an operator, administrator, issuer, or manufacturer of the device being protected.
- A local notification to a component within the application or system code of the electronic device. The local notification notifies the component receiving the notification of the attack. However, the reaction to the attack may then be unlinked from the detection of the attack to make it more difficult for the attacker to discern a connection between the detection of the attack and any further corrective action.

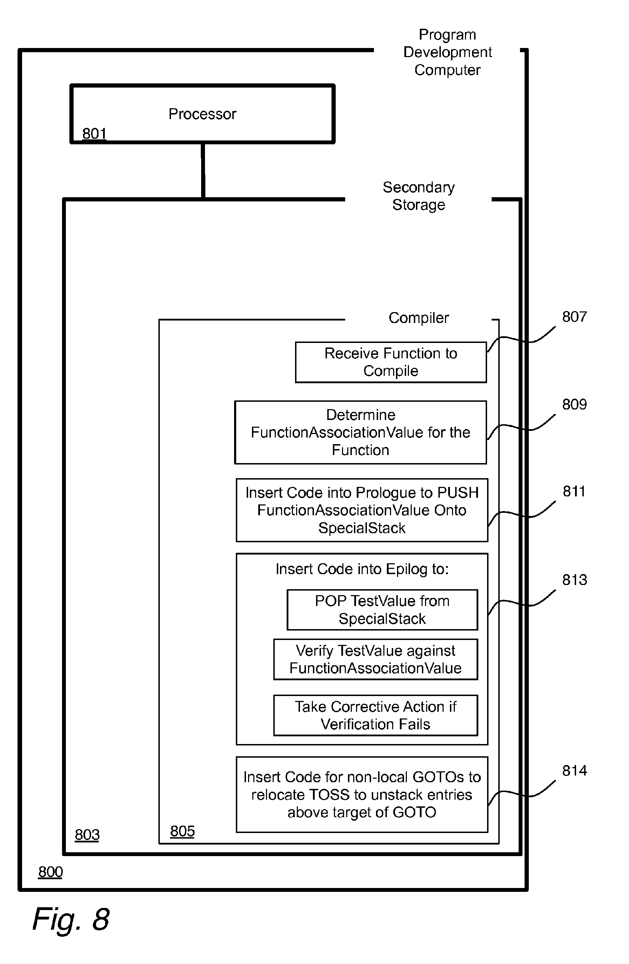

Figure 8 illustrates an aspect of the technology to protect a device against a return-oriented programming attack in which the technology is embodied in a programming development computer 800. The computer 800 includes a processor 801 and a secondary storage 803. The computer 800 may also include other standard devices such as volatile and non-volatile memory as well as user interface devices and multiple processors and storage devices.

The secondary storage 803 contains programs to control the execution of the processor 801. Those programs include a compiler 805. In lieu of a compiler, the secondary storage may include an assembler, an object-code post-processing program, or any other program that would cause the processor 801 to perform the steps of the flow chart of Figure 6. The compiler includes instructions to allow the computer 800 to "receive" a function to be compiled, instructions 807. Instruction sequences 809, 811, 813, and 814 correspond to the steps 601, 603, 605 and 607 of Figure 6, respectively, the discussion of which is incorporated here by reference.

Hereinabove a technology is described that protects a programmable device, e.g., a mobile communications device executing the Android or IOS operating systems, from manipulation of the return address for return from procedure calls. Thus, the technique provides an anti-tampering method that prevents a basic exploitation of the buffer overflow attack.

Although specific embodiments of the invention have been described and illustrated, the invention is not to be limited to the specific forms or arrangements of parts so described and illustrated. The invention is limited only by the claims.

## Claims

1. A method of operating an electronic device to protect functions of the electronic device against attacks that are constructed by chaining programming gadgets from executable code of an application or library wherein the gadgets each end with a return instruction, the method, comprising:
by a processor of the computer:
- computing a first value associated with the function; and
- placing an instruction to push the first value onto a special stack in a prologue of the function; and
- placing an instruction sequence in an epilog of the function:
- to compare a second value located at the top of the special stack against the first value; and
- to take a corrective action if the first value does not match the second value.

2. The method of operating an electronic device to protect functions of the electronic device against attacks that are constructed by chaining programming gadgets from executable code of an application or library wherein the gadgets each end with a return instruction Claim 1, the method further comprising:
detecting non-local GOTOs having a target function and for any non-local GOTOs placing an instruction sequence that removes entries in the special stack above the target function of the non-local GOTO by updating a stack pointer that points to the top of the special stack so that the stack pointer that points to the top of the special stack points to the special stack entry corresponding to the target function.

3. The method of operating an electronic device to protect functions of the electronic device against attacks that are constructed by chaining programming gadgets from executable code of an application or library wherein the gadgets each end with a return instruction Claim 1, the method further comprising:
detecting exception handling code and for exception handling code placing an instruction sequence that removes entries in the special stack above the target function that contains the corresponding exception handler of the raised exception by updating a stack pointer that points to the top of the special stack so that the stack pointer points to the target function.

4. The method of operating an electronic device to protect functions of the electronic device against attacks that are constructed by chaining programming gadgets from executable code of an application or library wherein the gadgets each end with a return instruction Claim 1 wherein the electronic device maintains an application stack and the special stack is not the same stack as the application stack.

5. The method of operating an electronic device to protect functions of the electronic device against attacks that are constructed by chaining programming gadgets from executable code of an application or library wherein the gadgets each end with a return instruction Claim 1 wherein the special stack is placed on a heap maintained by the electronic device.

6. The method of operating an electronic device to protect functions of the electronic device against attacks that are constructed by chaining programming gadgets from executable code of an application or library wherein the gadgets each end with a return instruction Claim 1 wherein the special stack is placed in a section of a static memory segment of the electronic device.

7. The method of operating an electronic device to protect functions of the electronic device against attacks that are constructed by chaining programming gadgets from executable code of an application or library wherein the gadgets each end with a return instruction of any preceding claim wherein the corrective action is to terminate execution of a program that has called the function.

8. The method of operating an electronic device to protect functions of the electronic device against attacks that are constructed by chaining programming gadgets from executable code of an application or library wherein the gadgets each end with a return instruction of any preceding claim wherein the corrective action is to issue a warning that execution flow may have been compromised.

9. The method of operating an electronic device to protect functions of the electronic device against attacks that are constructed by chaining programming gadgets from executable code of an application or library wherein the gadgets each end with a return instruction of any preceding claim wherein the corrective action is to transmit a message to an operator, administrator, issuer, or manufacturer of the electronic device indicative of a potential attack against the electronic device.

10. The method of operating an electronic device to protect functions of the electronic device against attacks that are constructed by chaining programming gadgets from executable code of an application or library wherein the gadgets each end with a return instruction of any preceding claim wherein the first value is a random value.

11. The method of operating an electronic device to protect functions of the electronic device against attacks that are constructed by chaining programming gadgets from executable code of an application or library wherein the gadgets each end with a return instruction of any preceding claim wherein the steps of placing an instruction into the prologue and epilog are performed by a compiler, assembler, or object-code post-processor.

12. The method of operating an electronic device to protect functions of the electronic device against attacks that are constructed by chaining programming gadgets from executable code of an application or library wherein the gadgets each end with a return instruction of any of claims 2 through 8 wherein the steps of detecting non-local GOTOs having a target function and for any non-local GOTOs placing an instruction sequence that removes entries in the special stack above the target function of the non-local GOTO by updating a stack pointer that points to the top of the special stack so that the stack pointer that points to the top of the special stack points to the special stack entry corresponding to the target function are performed by a compiler, assembler, or object-code post-processor.

13. The method of operating an electronic device to protect functions of the electronic device against attacks that are constructed by chaining programming gadgets from executable code of an application or library wherein the gadgets each end with a return instruction of any of claims 2 through 8 wherein the step of detecting exception handling code and for exception handling code placing an instruction sequence that removes entries in the special stack above the target function that contains the corresponding exception handler of the raised exception by updating a stack pointer that points to the top of the special stack so that the stack pointer points to the target function are performed by a run-time library.

14. A programmable electronic device, comprising a processor and a storage device storing instructions for the processor, the processor programmed to perform the method according to any of the foregoing claims.

15. A computer having a processor, memory and secondary storage, the computer comprising instructions stored in the secondary storage to cause the processor to:
receive a source code program to be protected against attacks that are constructed by chaining programming gadgets from executable code of an application or library wherein the gadgets each end with a return instruction;
for functions of the program:
- computing a first value associated with the function; and
- placing an instruction to push the first value onto a special stack in a prologue of the function; and
- placing an instruction sequence in an epilog of the function:
- to compare a second value located at the top of the special stack against the first value; and
- to take a corrective action if the first value does not match the second value.

16. The computer of Claim 15, wherein the instructions further comprise instructions to cause the processor:
to detect non-local GOTOs having a target function and for any non-local GOTOs, to place an instruction sequence that removes entries in the special stack above the target function of the non-local GOTO by updating a stack pointer that points to the top of the special stack so that the stack pointer that points to the top of the special stack points to the special stack entry corresponding to the target function.

17. The computer of Claim 15, wherein the instructions further comprise instructions to cause the processor:
to detect exception handling code and for exception handling code to place an instruction sequence that removes entries in the special stack above the target function that contains the corresponding exception handler of the raised exception by updating a stack pointer that points to the top of the special stack so that the stack pointer points to the target function

18. The computer of Claim 15 wherein the instructions further comprises instructions to cause the processor to maintain an application stack and a special stack that is not the same stack as the application stack.

19. The computer of Claim 15 wherein the special stack is placed on a heap maintained by the electronic device.

20. The computer of Claim 15 wherein the special stack is placed in a section of a static memory segment of the electronic device.

21. The computer of any of Claim 15 through 20 wherein the corrective action is chosen amongst the following action:
- to terminate execution of a program that has called the function.
- to issue a warning that execution flow may have been compromised.
- to transmit a message to an operator, administrator, issuer, or manufacturer of the electronic device indicative of a potential attack against the electronic device.

22. The computer of any of Claim 15 through 1 wherein the instructions are embedded in a compiler, assembler, object-code post-processor or run-time library.
